# EUROPEAN PATENT APPLICATION

(11) **EP 1 427 135 A2**
(43) Date of publication of application: **09.06.2004**
(21) Application number: 03257436.0
(22) Date of filing: 26.11.2003
(51) Int. Cl.: H04L 12/24

(54) **Device management method**

(30) Priority: 04.12.2002 JP 2002351941; 11.12.2002 JP 2002359641
(71) Applicant: SEIKO EPSON CORPORATION, Shinjuku-ku, Tokyo 163-0811 (JP)
(72) Inventor: Shima, Toshihiro, Suwa-shi Nagano-ken 392-8502 (JP)
(74) Representative: Sturt, Clifford Mark

(57) **Abstract**

A printing system is constructed by connecting a management server with a large number of printers via a network. Each printer records a log, which represents a consumption of an expendable, for example, a consumption of toner, and is mapped to an elapsed time period measured by a built-in timer, and uploads the recorded log to the management server at a preset cycle. The printer acquires an upload time from the management server in the process of uploading and carries out subsequent recording with the acquired upload time as a base time. The printer corrects the elapsed time period mapped to the log, based on the upload time acquired from the management server. This arrangement enables even a printer without a real time clock to prevent expansion of an error and efficiently record the log with high accuracy.

## Description

### BACKGROUND OF THE INVENTION

### 1. Field of the Invention

The present invention relates to a technique of remotely managing devices connecting with a network.

### 2. Description of the Related Art

A printing system has been used widely, where multiple printers are connected to a network and are shared by multiple clients. The printing system often includes a management server on the network to remotely manage the working status of each printer. This system manages the working status, while the management server sends an inquiry about information on the working status of the printer, for example, a remaining amount of an expendable, to the printer. Alternatively each printer may notify the management server of the information on the working status of the printer at regular intervals. It is desirable to acquire a time-based variation in working status from each printer for the effective management.

Some models of printers do not have a built-in real time clock, for the reduced manufacturing cost. The built-in real time clock requires a battery for driving the real time clock in the power OFF state of the printer. This undesirably increases the total manufacturing cost of the printer.

The printer has a timer, which is driven with a clock of driving a CPU. This timer starts counting at a power ON time of the printer and measures elapse of a time period since the power ON time (hereafter referred to as 'relative time').

The printer connecting with the network can acquire an absolute time from a server, such as an NTP (Network Time Protocol) server. Even a printer without a built-in real time clock can specify the absolute time at each time point, based on the count on a timer, which measures elapse of a time period since the absolute time acquired from the NTP server.

In a large-scaled printing system including a large number of printers connecting with a network, the load on the network may be significantly increased, due to acquisition of the absolute time from the NTP server by each of the printers. While each printer sends a packet of requiring transmission of the absolute time to the NTP server, the NTP server may not immediately reply the absolute time. The printer sends the requirement packet again, when receiving no reply of the absolute time within a preset time period since transmission of the requirement packet. The requirement packets sent from the respective printers including these retries significantly increases the load on the network.

There are other additional loads for setting the correct time on the NTP server and setting an address of the NTP server on the network in the printer. It is thus relatively hard to record the working status of the printer related to the time.

The prior art management method has additional problems other than those discussed above. The first problem is the presence of a firewall, which may be interposed between each printer as an object of management and the management server in a large-scaled printing system. The firewall may interfere with smooth inquiries from the management server to the respective printers.

The second problem is a significantly heavy traffic on the network due to inquiries and notifications of the working status, when there are a large number of printers as objects of management. The heavy traffic may interfere with the smooth transmission of print jobs.

The third problem is difficulty in specification of a printer as an object of management in a network structure where a DHCP server dynamically allocates an IP address to each printer. In this environment, for identification of each object printer, the address allocated to the printer is to be specified, based on a serial number or an MAC address. This undesirably increases the traffic on the network and complicates the management.

One possible measure to prevent the heavy traffic reduces the frequency of acquiring the working status from each printer. This method, however, causes another problem of the lowered accuracy of management. The information on the working status of the printer includes information obtained by a sensor of a relatively low sensitivity, for example, the remaining amount of toner in the printer. In the actual state, the remaining amount of toner continuously varies with a variation in number of printed sheets. The sensor output, however, gives a discrete variation at the time when a preset amount of toner has been consumed. For highly accurate monitoring of the variation in remaining amount of toner by interpolation of the discrete variation, the procedure should set a sufficiently short sampling interval and accurately specify the time when the sensor output has a discrete variation. The reduced frequency of acquiring the working status of each printer undesirably leads to the lowered accuracy of monitoring the remaining amount of toner.

### SUMMARY OF THE INVENTION

The drawbacks discussed above are found not only in printers but are commonly found in the process of remotely managing devices connecting with a network. The object of the invention is thus to solve these problems and to ensure accurate and efficient remote management of devices. The object of the invention is to enable a device without a built-in real time clock to acquire an absolute time without significantly increasing the load on the network.

The invention is directed to a device connecting with a network. The device of the invention may be any of diverse devices that work on a network, for example, printers, scanners, projectors, audio equipment, electric appliances, client computers, and PDAs.

The device of the invention has a timer that measures elapse of a time period, and is communicable with another device connecting with the network to provide a specified service. The device of the invention acquires an absolute time from the another device and sets the acquired absolute time to a base time, which is used to specify the time at each time point based on the measurement result of the timer. This arrangement ensures accurate specification of the time information at any arbitrary time point. The device of the invention may have various constructions as discussed below.

The device of the invention may be constructed to record a log representing a working status of the device mapped to the time information. The device does not have a built-in real time clock but has a timer that measures elapse of a time period as mentioned above. The time information may be obtained by measuring elapse of a time period since a preset base time with the timer. A parameter representing the working status may be set according to the device, for example, a consumption of an expendable, a consumption of power, or an operational load of a CPU. The device of the invention sends the log thus recorded to a preset server as a destination of transmission via the network. In this transmission process, the device acquires an absolute time from the preset server as the destination of transmission and sets the acquired absolute time to a base time of subsequent log recording.

As described above, the device of the invention records a log and sends the recorded log to the server. This arrangement enhances the recording frequency required for the sufficient accuracy in management, while reducing the transmission frequency. This desirably relives the management-related traffic on the network. The device sets the absolute time acquired from the server in the course of transmission of the log to the base time. This arrangement effectively enables even a device without a built-in real time clock to enhance the accuracy of time information recorded in the log. For example, even when the measurement of the elapsed time with the timer includes some error, the error of the time information is cancelled every time the absolute time is acquired from the server and is set to the base time.

Mounting the function of the real time clock that measures the absolute time on each device undesirably increases the manufacturing cost of the device. There is also a difference in time among multiple devices having the real time clock function. The time difference may lead to the lowered accuracy of management, in the case where multiple devices are objects of management. The technique of the invention simply utilizes the absolute time acquired from the server and advantageously synchronizes the time information in all the devices.

In another preferable embodiment of the invention, the device corrects the time period measured by the timer and uses the corrected time period for log recording. One method corrects an error included in the measurement result of the timer by taking into account a time interval specified from absolute times acquired from the server more than once and a measurement result of the timer corresponding to the specified time interval, and records the log. Such error correction further enhances the accuracy of the time information recorded in the log.

In the device of the invention, various values may be set to the log transmission interval and the log recording interval. Setting a longer log transmission interval is desirable for the relieved traffic on the network, while setting a shorter log recording interval is desirable for the enhanced monitoring accuracy of the working status. It is preferable that the log transmission interval is set to be longer than the log recording interval.

In the structure of this embodiment, the device sends the log to the server, so that the server is not required to make an inquiry about the working status of each device. Namely the server is not required to specify the address of the device. The technique of the invention is thus applicable to a system where an address is dynamically allocated to each device via the network, as well as to a system where a fixed address is allocated to each device. Because of the same reasons, the technique of the invention is also applicable to a system including a firewall interposed between the server and the respective devices.

The technique of the invention is further applicable to a discretely varying parameter, which represents a continuously varying working status. A typical example of such a parameter is a remaining amount of toner in a printer. When this parameter is recorded as a log, the preferable procedure records the log at a shorter interval than a minimum time interval that causes a discrete variation. This enables the working status of the device to be monitored with high accuracy.

The present invention is also directed to a management server that manages a working status of each device connecting with a network. The management server receives a log representing a record of a working status of the device mapped to the time, corrects the time recorded in the log, and holds the corrected time in each device. The time may be corrected by taking into account a time interval specified from reception times of multiple logs and a measurement result of the timer corresponding to the specified time interval. The management server of this arrangement can accurately acquire the log even in a system including devices without the function of eliminating the effects of the error of the timer count.

The measurement result of the timer may be acquired from the device, along with acquisition of the log. When a fixed cycle or a varying cycle is set in advance to the log transmission timing, the log is transmitted from the device when the count on the timer reaches the preset cycle. The time may thus be corrected by regarding the preset cycle as a time interval measured by the timer. This allows for correction of the time information without the measurement result of the timer received from the device.

The present invention is also directed to a management server, which may have or may not have the function of correcting the time information discussed above. The management server holds a quantitative parameter value relating to the working status of each device as a log in a times series. The parameter value may be a resettable value, for example, a remaining amount of toner in a printer, in response to a user's operation on the device, for example, replacement of a toner cartridge. In such cases, the management server of this invention adds a parameter value of a log acquired after a reset to a parameter value acquired immediately before the reset, so as to output a time-based variation in working status of the device over the reset.

This arrangement ensures relatively easy monitoring of the variation in working status over the reset. The output allows for interpolation of the discretely varying parameter value over the reset, thus advantageously enabling a time-based variation of the parameter to be monitored with high accuracy.

The device of this embodiment may be an output device that is capable of outputting sound or images. The timer measures, for example, a time period since a power ON time. This device may receive an absolute time along with an output file. This arrangement enables the time on each time point to be specified, based on the received absolute time and the measurement result of the timer.

The absolute time is, for example, the latest update time of the output file. The latest update file of the output file may represent the time when the client has created the output file as a job. This time is specified by a built-in real time clock of the client. In the case of transmission of an output file to the device via a predetermined file server, the time when the file server has received the output file may be set to the absolute time. This time is specified by a built-in real time clock of the file server.

The absolute time may be included in the output file for transmission, or may be sent separately from the output file.

The technique of the invention is effectively applicable to a device without a built-in real time clock, which is driven with a battery even in the power OFF state.

A diversity of methods may be used to specify the time in the device. One procedure resets the count on a timer to zero at the time point of reception of the absolute time and stores the received absolute time to update the base time. The correct time is specified by adding the count on the timer to the base time, that is, the stored absolute time.

The device of the invention may acquire the absolute time from a reporting address server, while sending the collected data in the form of a report file to the reporting address server.

The invention is also directed to a client that creates an output file to be output to the device that outputs the file as sound or images. The client generates information on the absolute time at the time point of generation of the output file and sends the output file and the absolute time to the output device. The output device can thus acquire the absolute time. One typical example of the output device is a printer.

The technique of the present invention is not restricted to the various arrangements of the device and the management server discussed above, but may have a diversity of other applications. One possible application is a system including a device and a management server discussed above are mutually connected via a network. Another application is an output system including a client and an output device for outputting sound or images, which are mutually connected. Still another application is a printing system including a printer as the output device. The invention is also directed to control methods that cause the device or the client to attain the functions discussed above, as well as to computer programs to actualize these control methods. The invention is further directed to management methods that cause the management server to manage the working status of each device, as well as to computer programs to actualize these management methods. Still another application of the invention is a recording medium in which any of such computer programs is recorded. Typical examples of the recording medium include flexible disks, CD-ROMs, magneto-optical disks, IC cards, ROM cartridge, punched cards, prints with barcodes or other codes printed thereon, internal storage devices (memories like RAMs and ROMs) and external storage devices of the computer, and a variety of other computer readable media.

These and other objects, features, aspects, and advantages of the present invention will become more apparent from the following detailed description of the preferred embodiments with the accompanying drawings.

### BRIEF DESCRIPTION OF THE DRAWINGS

Fig. 1 schematically illustrates the construction of a printing system in a first embodiment of the invention;

Fig. 2 is a flowchart showing a consumption notification routine;

Fig. 3 shows a method of correcting time period information;

Fig. 4 is a flowchart showing a trend output routine;

Fig. 5 is a flowchart showing a log management routine executed in a second embodiment of the invention;

Fig. 6 shows a method of correcting the time;

Fig. 7 is a block diagram showing the general construction of a printing system in a third embodiment of the invention;

Fig. 8 is a block diagram showing the internal structure of a client in the third embodiment;

Fig. 9 is a block diagram showing the internal structure of a printer in the third embodiment;

Fig. 10 shows a process flow of sending a file to be printed from the client to the printer via an FTP server in the printing system of the third embodiment;

Fig. 11 is a flowchart showing an absolute time setting routine executed by the printer in the third embodiment;

Fig. 12 shows a variation in remaining amount of toner with elapse of time, which is collected by the printer based on a count on a timer in the third embodiment;

Fig. 13 is a block diagram showing the general construction of a printing system in a fourth embodiment of the invention;

Fig. 14 shows a process flow of sending a file to be printed from a client to a printer in the printing system of the fourth embodiment;

Fig. 15 shows the format of a file to be transmitted from a client to a printer in a printing system of a fifth embodiment;

Fig. 16 shows a process flow of sending a file to be printed from the client to the printer via an FTP server in the printing system of the fifth embodiment;

Fig. 17 is a flowchart showing an absolute time setting routine executed by the printer in the fifth embodiment;

Fig. 18 is a flowchart showing an absolute time acquisition routine executed by a printer in a sixth embodiment of the invention; and

Fig. 19 is a flowchart showing an absolute time acquisition routine executed by a printer in a modified example of the sixth embodiment.

### DESCRIPTION OF THE PREFERRED EMBODIMENTS

### A. First Embodiment

### A1. Construction of System

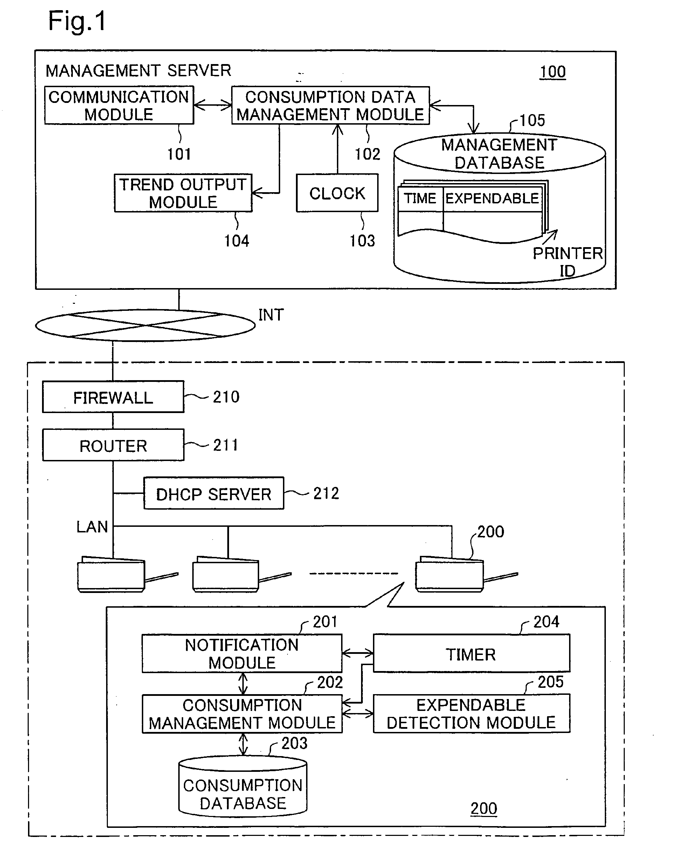

Fig. 1 schematically illustrates the construction of a printing system in a first embodiment of the invention. The frame shown by the one-dot chain line represents a printing environment constructed in a business organization. In this printing environment, a large number of printers including a printer 200 are connected to a local area network LAN. Clients that output print jobs to these printers are also connected to the LAN, although the clients are omitted from the illustration.

IP addresses of the respective printers on the LAN are not fixed, but a DHCP server 212 dynamically allocates IP addresses to the respective printers at a power-ON time. The LAN is connected to the Internet INT via a router 211 and a firewall 210. The firewall 210 is designed to restrict transmission of packets from the Internet INT to the LAN according to a protocol, while allowing transmission of packets from the LAN to the Internet INT.

A management server 100 is connected to the Internet INT. The management server 100 remotely controls working statuses of the respective printers via the Internet INT. The firewall 210 located between the LAN and the Internet INT restricts access from the management server 100 to the printers, while allowing access from the printers to the management server 100 according to either an HTTP protocol or an FTP protocol.

The procedure of this embodiment manages the number of printed sheets and the consumption of toner by the printer as the working status of each printer. The number of printed sheets by the printer is a parameter relating to the consumption of printer sheets and the residual operating life of a photosensitive drum. In the description below, the number of printed sheets and the consumption of toner are collectively referred to as the consumption of the expendable or simply as the consumption. The working status as the parameter to be managed is not restricted to this consumption of the expendable but may be power consumption or a process load of a printer engine.

The functional blocks of the printer 200 are also shown in Fig. 1. The printer 200 has a control unit that is constructed as a microcomputer including a CPU, a RAM, and a ROM. The respective functional blocks are actualized by a software configuration according to computer programs recorded in the ROM.

The printer 200 has functions of sequentially storing the working status as a log and notifying the management server 100 of the log, in addition to the functional blocks for execution of printing. The illustration shows only the functional blocks relating to the notification function.

A timer 204 gives time period information to be recorded in each log as an elapsed time period since a preset base time. The timer 204 is, however, not a real-time clock and is not capable of acquiring real time information.

A consumption management module 202 generates a log representing the consumption of the expendable and gives the log to a notification module 201. The consumption management module 202 records the log at a preset recording cycle, based on the time period information given from the timer 204. An expendable detection module 205 obtains pieces of information to be recorded in each log, for example, the remaining amount of toner and the number of printed sheets, under control of the consumption management module 202. A typical example of the expendable detection module 205 is an MIB (Management Information Base). The log thus obtained is stored in the form of a consumption database 203 in an internal hard disk of the printer 200.

The notification module 201 notifies the management server 100 of the log at a preset notification cycle. The notification cycle may be set as a fixed time period like 'every week' or may be set as a flexibly changing time period according to a notification condition like 'whenever there is no spooled print job'. In order to prevent the notification of the log from causing a heavy traffic in the network, it is preferable to set a sufficiently longer notification cycle than the log recording cycle.

In the structure of the embodiment, the FTP protocol is used for notification from the notification module 201 to the management server 100. The FTP protocol is, however, not restrictive, but a variety of other protocols that have no interference of the firewall 210, like the HTTP protocol, are applicable for such notification. The notification module 201 acquires the current time at the time point of the notification from the management server 100. The acquired current time is set as a base time of log recording.

The management server 100 has diverse functional blocks to manage the logs transmitted from the respective printers as shown in Fig. 1. A communication module 101 functions to communicate with each printer via the Internet INT.

A consumption data management module 102 functions to manage the logs received from the respective printers. The logs thus received are recorded in the form of a management database 105 in an internal hard disk of the management server 100. The inner structure of the management database 105 is illustrated as an example. The management database 105 manages the consumption of the expendable mapped to the time with regard to each printer ID allocated to each printer for identification thereof.

The management server 100 has a clock 103, which outputs time information. Every when receiving a log from each printer, the consumption data management module 102 acquires a log-receiving time from the clock 103 and notifies the printer of the acquired log-receiving time. As mentioned previously, this log-receiving time is used as the base time of log recording in the printer.

A trend output module 104 outputs a time-based variation in consumption of the expendable as a trend, based on the log in the management server 105. The operator of the management server 100 reads the output trend and thereby remotely monitors the working status of each printer in the business organization.

The structure of this embodiment is only illustrative and not restrictive in any sense. As examples of possible modification, the management server 100 may be connected to a LAN, and each printer may have a fixed IP address. The management server 100 may comprehensively manage a large number of printers belonging to multiple business organizations, that is, printers connecting with multiple LANs. The respective functional blocks discussed above may be constructed by hardware, instead of the software configuration of the embodiment.

### A2. Consumption Notification Process

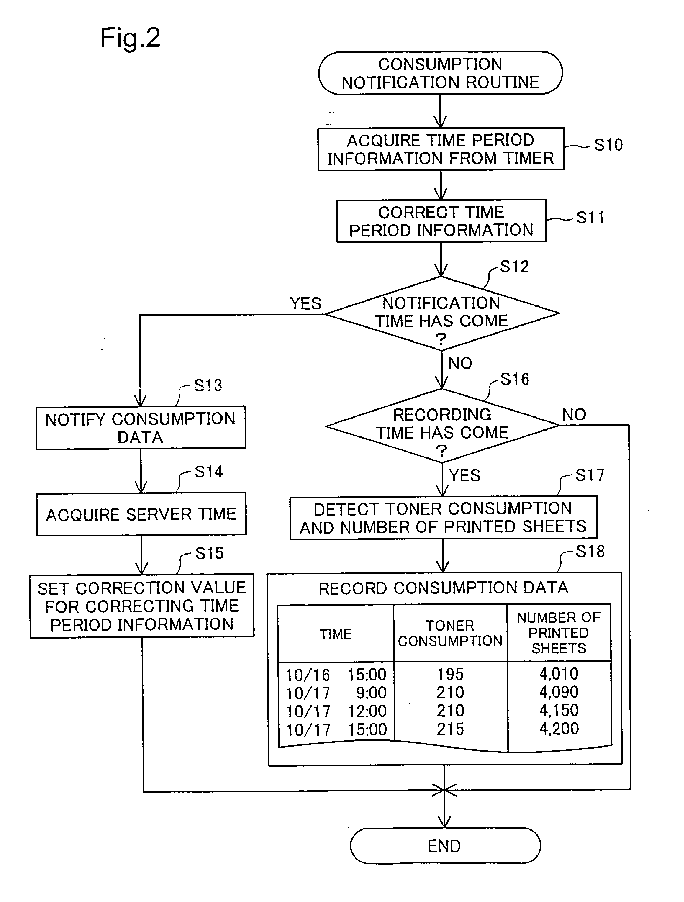

Fig. 2 is a flowchart showing a consumption notification routine, which is repeatedly executed by the control unit of the printer 200. When the consumption notification routine starts, the control unit first acquires time period information from the timer 204 (step S10) and corrects the acquired time period information (step S11). The procedure of the correction will be discussed later. In a first execution cycle of this consumption notification routine, no correction value has been set, so that the correction is practically not carried out.

The control unit then determines whether a notification time for notifying the management server 100 of a log has come, based on the time period information (step S12). For example, when 'one week' is set to the notification cycle, the control unit determines whether one week has elapsed since a previous notification, based on the time period information. In the case where a notification condition, for example, 'whenever there is no spooled print job', is set, instead of the fixed notification cycle, the processing of step S12 may be replaced by a decision of whether the preset notification condition is fulfilled.

When the notification time has not yet come, the control unit subsequently determines whether a recording time has come (step S16). When the recording time has also not yet come, the control unit does not execute any further processing and exits from the consumption notification routine. In the case where a recording condition, for example, 'whenever printing is completed', is set, instead of the recording cycle, the processing of step S16 may be replaced by a decision of whether the preset recording condition is fulfilled.

When it is determined that the recording time has come, on the other hand, the control unit detects the consumption of toner and the number of printed sheets at that time point (step S17) and records the result of the detection as a log in the consumption database 203 (step S18). The contents of the log recorded are given as an example in the flowchart. In this illustrated example, the consumption of toner and the number of printed sheets mapped to each time are recorded as consumption data. The time recorded in the log is obtained by adding the time period information acquired at step S10 and corrected at step S11 to the time when counting of the timer 204 has started (hereafter referred to as the base time).

The consumption of toner may not be changed immediately in the course of printing, as clearly understood by a comparison between data 'the time 9:00, the toner consumption 210, the number of printed sheets 4090' and data 'the time 12:00, the toner consumption 210, the number of printed sheets 4150'. The consumption of toner continuously varies with a variation in number of printed sheets. Because of the low sensitivity of a sensor for sensing the toner consumption, however, the output of the toner consumption discretely changes, when a certain amount of toner is consumed. In order to ensure monitoring of such discrete changes with sufficiently high accuracy, it is desirable to set a sufficiently shorter log recording cycle than a minimum time interval when such a discrete change arises.

When it is determined at step S12 that the notification time has come, the control unit notifies the management server 100 of the log recorded in the consumption database 203 (step S13). The control unit acquires the time at the time point of notification from the management server 100 in the course of the notification (step S14) and sets a correction value for correcting the time period information, based on the acquired time (step S15). The correction value is used for the correction of the time period information at step S11 in a subsequent cycle of this consumption notification routine.

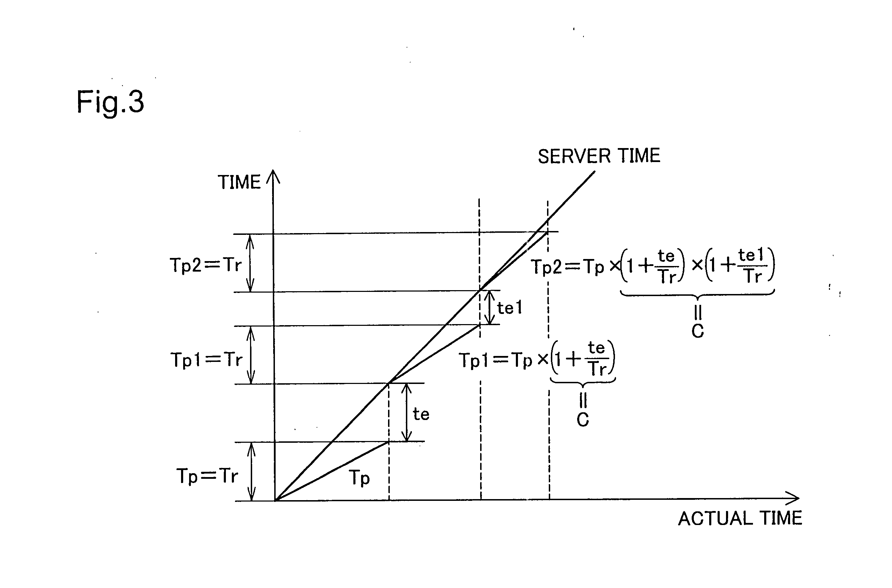

Fig. 3 is a graph showing a method of correcting the time period information. In the graph of Fig. 3, the time obtained by the clock 103 included in the management server 100 (hereafter referred to as the 'server time') and the time computed from the count on the timer 204 included in the printer 200 (hereafter referred to as the 'printer time') as ordinate are plotted against the real time as abscissa.

In the description below, it is assumed that the server time is equal to the real time and that a fixed time period Tr is set to the cycle of notification from the printer 200 to the management server 100.

A straight line Tp represents a printer time when a first cycle of the consumption notification routine is executed. At this time point, no correction value has been set yet, and time period information Tp obtained by the timer 204 is directly set to the printer time Tp. When the time period information Tp includes some error, the printer time Tp is deviated from the real time. At the time point when the printer 200 determines that the notification cycle Tr has come, based on the printer time Tp, the printer 200 notifies the management server 100 of the log and acquires the server time from the management server 100. Acquisition of the server time specifies an error 'te' included in the printer time Tp.

In this example, at the time point of notification, the printer time Tp is behind the server time by the error 'te'. The time period information Tp should be multiplied by (1+te/Tr) for compensation of this time lag. This value (1+te/Tr) is set to a correction value C for correcting the time period information Tp.

A straight line Tp1 represents a printer time when a second cycle of the consumption notification routine is executed after setting of the correction value C. The printer 200 sets the server time acquired at the time point of notification as the base time, so that an initial value of the printer time Tp1 does not include the error 'te'. The printer 200 multiplies the time period information Tp acquired from the timer 204 by the correction value C to obtain the printer time Tp1. This process corresponds to correction of the time period information executed at step S11 in the flowchart of Fig. 2.

When it is determined that the notification time Tr has come, based on the printer time Tp1 thus obtained, the printer 200 notifies the management server 100 of the log and acquires the server time from the management server 100. Acquisition of the server time may specify a newly arising error 'te1'. In the illustrated example, the setting of the correction value C should be further multiplied by (1+tel/Tr) for compensation of the error 'te1'. The correction value C is accordingly set equal to (1+te/Tr)×(1+te1/Tr).

In the structure of this embodiment, every when the printer 200 notifies the management server 100 of the log, the printer 200 acquires the server time and updates the correction value C for correcting the time period information acquired from the timer 204. The time recorded in the log gradually approaches to the server time and has the higher accuracy as shown in Fig. 3.

The correction method of the time period information discussed above is only illustrative and not restrictive at all. One modified method may constantly use the value '1+te/Tr', which is set to the correction value C in the first cycle of the compensation notification routine. Another possible modification does not carry out the correction of the time period information acquired from the timer. Even in such cases, the server time acquired at the time point of notification is used as the base time. This effectively prevents a potential error included in the time information recorded in the log from expanding with no limitation.

The procedure of this embodiment acquires the server time and sets the correction value, after notification of the consumption data. The sequence of this processing may be modified in various ways. One modified procedure may acquire the server time (step S14), set the correction value (step S15), correct the time information recorded in the consumption data with the setting of the correction value, and notify the management server 100 of the consumption data (step S13). The correction method shown in Fig. 3 is also applicable for the modification in this modified procedure.

### A3. Trend Output

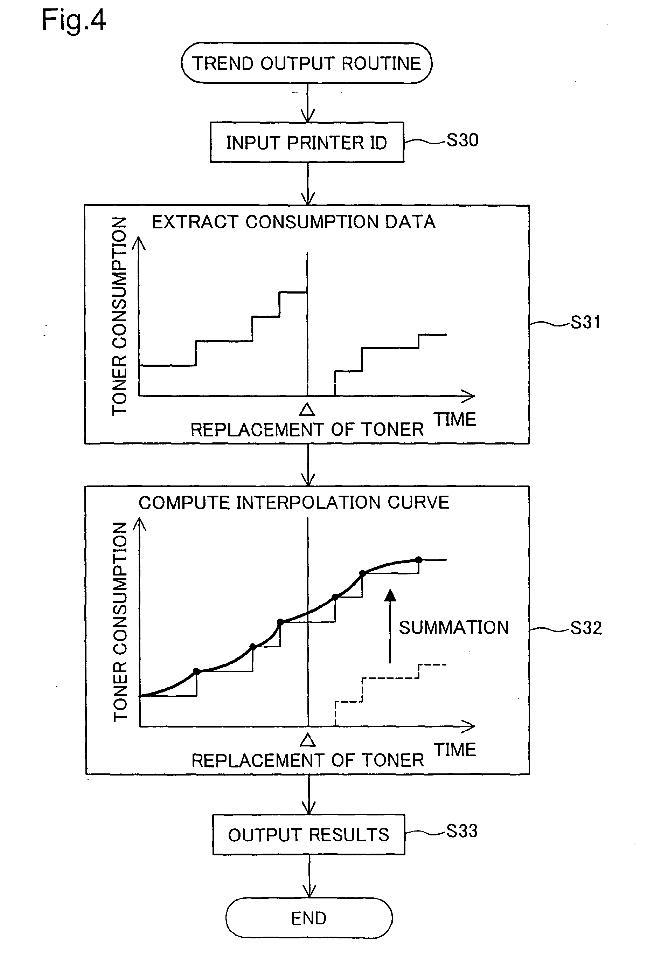

Fig. 4 is a flowchart showing a trend output routine, which is executed by the management server 100 in response to the operator's instruction.

When the trend output routine starts, the management server 100 first inputs a printer ID as a subject of output of a trend, for example, a time-based variation in consumption of toner (step S30). The management server 100 then extracts the consumption data or the log corresponding to the input printer ID from the management database 105 (step S31). A time-based variation in consumption of toner is shown as an example of the consumption data in Fig. 4.

The consumption of toner continuously varies with progress of printing. The printer, however, generally has a sensor of a low sensitivity for sensing the toner consumption and gives discretely increasing values as the consumption of toner. Each replacement of toner resets the consumption of toner. The simple output of the consumption data accordingly gives a stepwise trend as illustrated. Here the consumption of toner represents a cumulative consumption of toner since a start of using a new toner cartridge. This value is utilized as accounting information to charge the cost of the consumption of the expendable by a printer to each user of the printer.

The management server 100 computes an interpolation curve, which shows an actual continuous variation, based on the trend (step S32) and outputs the trend corrected with the computed interpolation curve (step S33). The interpolation curve may be a spline curve going through the discretely varying values of the toner consumption or a sequential line that linearly interpolates the discretely varying values of the toner consumption.

A trend after toner replacement as shown by the broken line is obtained from the extracted consumption data. The management server 100 adds the trend of the broken line to the consumption at the time point of toner replacement and specifies an apparent trend on the assumption of no reset of the toner consumption as shown by the solid line. The management server 100 computes the interpolation curve, based on this apparent trend. This method gives a time-based variation in toner consumption over the toner replacement.

The consumption of toner is output as the trend in the above description. The trend to be output may be the number of printed sheets. The output trend may be the result of one single printer or the results of multiple printers.

As described above, in the printing system of the first embodiment, each printer records a log and notifies the management server 100 of the log. This arrangement desirably relieves the traffic on the network, while the management server 100 obtains the working status of each printer. The notification from each printer to the management server 100 enables the management server 100 to monitor the working status of each printer without any interference of the firewall.

In the structure of the first embodiment, the time information acquired from the server at the time point of notification of the log is used as the base time of log recording. This arrangement effectively enhances the accuracy of the time information recorded in the log by even the printer without a real time clock.

### B. Second Embodiment

In the structure of the first embodiment, the printer corrects the time and records a log. In the structure of a second embodiment, on the other hand, the management server takes charge of correcting the time. The hardware construction of the printing system in the second embodiment is identical with that of the first embodiment. The differences from the first embodiment are a series of processing executed by the printer to record a log and a series of processing executed by the management server to store the log.

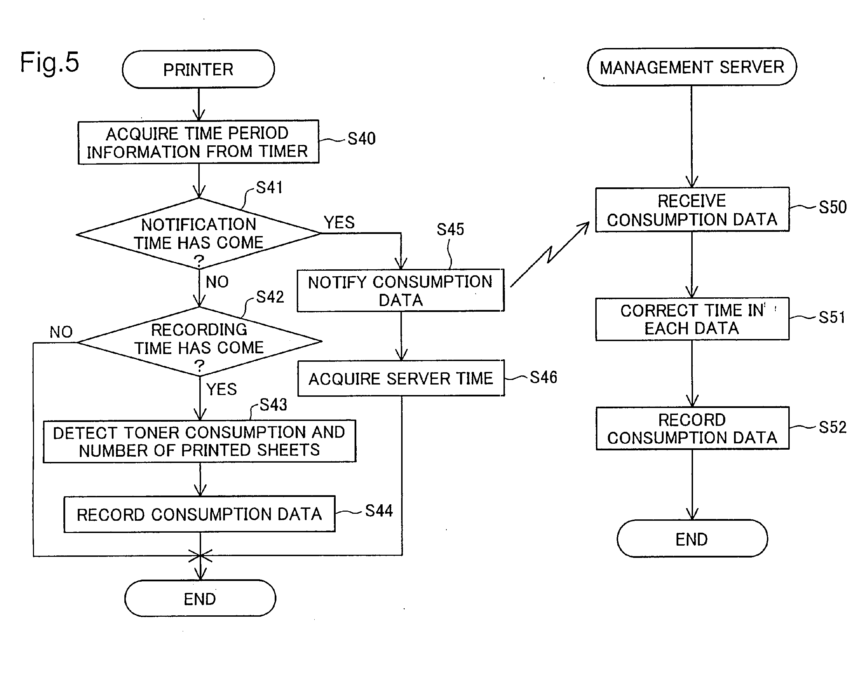

Fig. 5 is a flowchart showing a log management routine executed in the second embodiment. The left flow shows a series of processing repeatedly executed by the control unit of each printer, and the right flow shows a series of processing executed by the management server 100.

The control unit of the printer first acquires time period information from the timer 204 (step S40) and successively determines whether the log notification time and the log recording time have come (steps S41 and S42). In the case of a negative answer at both steps S41 and S42, the control unit exits from the log management routine.

When it is determined at step S42 that the log recording time has come, the control unit detects the consumption of toner and the number of printed sheets (step S43) and records the detection results as a log in the consumption database 203 (step S44). As the difference from the procedure of the first embodiment, the control unit of the printer does not correct the time period information acquired from the timer 204. The time information recorded in the log accordingly includes an error corresponding to a counting error of the timer 204.

When it is determined at step S41 that the log notification time has come, the control unit notifies the management server 100 of the consumption data or the log recorded in the consumption database 203 (step S45) and acquires the server time (step S46). As in the procedure of the first embodiment, the server time is used as the base time of log recording.

The management server 100 receives the consumption data from each printer (step S50), corrects the time included in each received consumption data (step S51), and records the consumption data with the corrected time into the management database 105 (step S52).

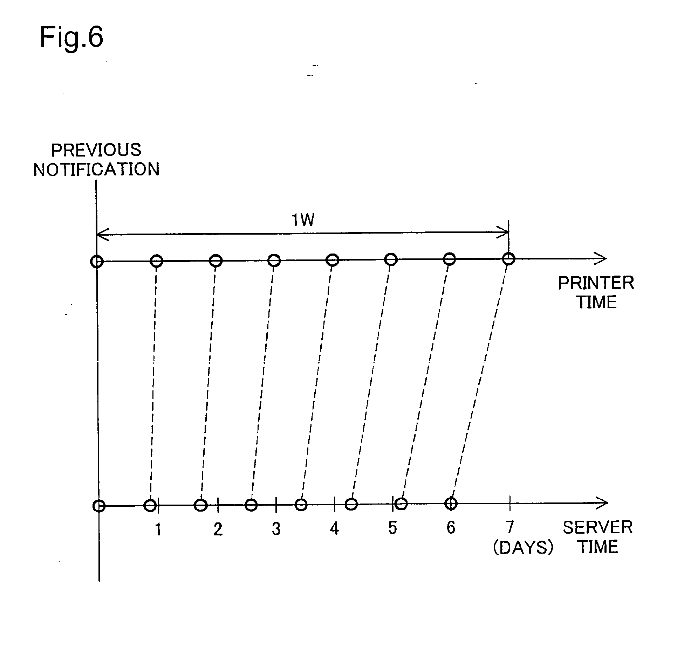

Fig. 6 shows a method of correcting the time. In this example, a time period 'one week' is set to the log notification cycle. The upper row shows the printer time recorded in the log, and the lower row shows the server time or the real time. There is an error or a difference between the printer time and the server time. The printer time is longer than the server time. Each open circle represents the time point when the consumption data was recorded in the log. In this illustrated example, the printer records the consumption data in the log every day, based on the printer time.

The printer notifies the management server of the log when one week has elapsed on the printer time. At this moment, only 6 days have elapsed on the server time. Since data of 7 days have been recorded in the log, the measurement time on the timer of the printer is 7/6 times of the real time. The management server accordingly multiplies the elapsed time period since the base time by a correction coefficient 6/7 and thereby corrects the time information recorded in the log. The log is recorded at a cycle shorter than 1 day, on the basis of the server time.

The correction coefficient is specified as the ratio of the 'real time interval of log notification' to the 'log notification cycle'. When a fixed value is set to the log notification cycle, the management server may specify the correction coefficient without referring to the time information recorded in the log.

In the printing system of the second embodiment, the management server takes charge of correcting the time information. This arrangement effectively enhances the accuracy of the time information recorded in the log by even the printer without a real time clock.

### C. Modifications

The first and the second embodiments discussed above regard the printing system to manage the working status of each printer. The technique of the invention is, however, not restricted to the management of printers but is applicable to manage a diversity of devices including scanners, projectors, audio equipment, electric appliances, and client computers.

The procedure of the first embodiment may be combined with the procedure of the second embodiment. Namely both the printer and the management server take charge of correcting the time information recorded in the log. This further enhances the accuracy of the time information recorded in the log.

### D. Third Embodiment

In a third embodiment of the invention, a printer receives a print file along with information on a latest update time of the print file and sets the latest update time to an absolute time.

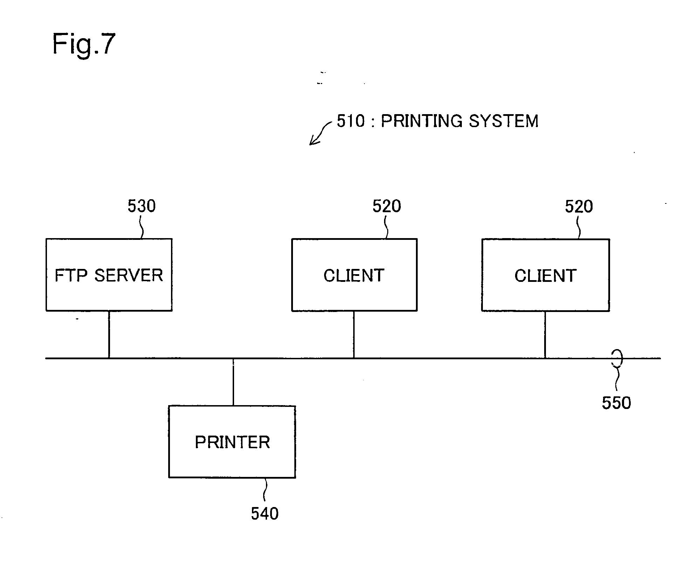

Fig. 7 is a block diagram showing the general construction of a printing system 510 in the third embodiment. The printing system 510 of the third embodiment includes a client 520, an FTP (File Transfer Protocol) server 530, and a printer 540, which are mutually connected via a network 550.

One or multiple clients 520 are connected to the network 550. The client 520 is a terminal that generates print data, for example, a personal computer or a PDA (personal digital assistant). In the structure of this embodiment, the client 520 creates a print job to be printed by the printer 540, based on print data created by the user, and transmits the print job in the form of a print file to the FTP server 530 according to the FTP protocol.

The FTP server 530 is a file server that manages transmission of files according to the FTP protocol. In the structure of this embodiment, the FTP server 530 sends the received print file to the printer 540 according to the FTP protocol.

An ink jet printer or a laser printer is applicable to the printer 540 that receives the print file transmitted from the FTP server 530 and carries out printing. The printer 540 does not include a real time clock, which is driven by a battery in the power OFF state.

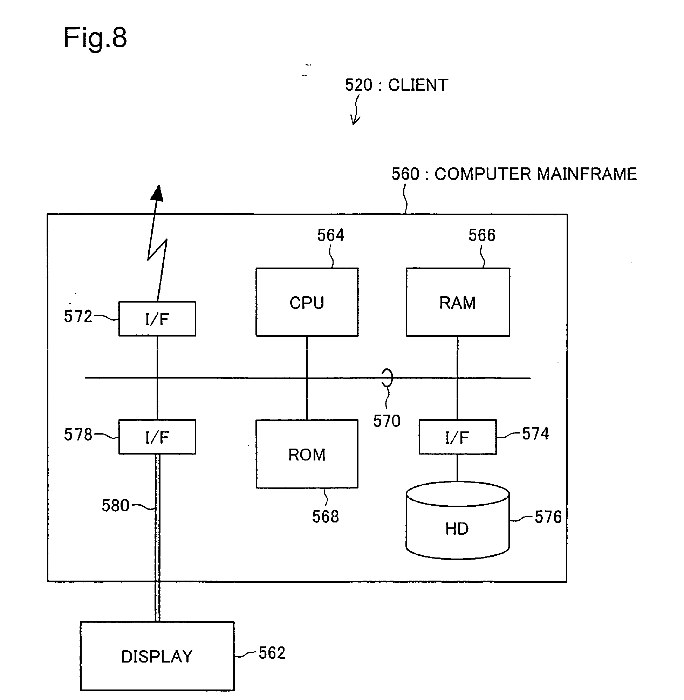

Fig. 8 is a block diagram showing the internal structure of the client 520. The client 520 of this embodiment includes a computer mainframe 560 and a display 562.

The computer mainframe 540 includes a CPU (central processing unit) 564, a RAM (random access memory) 566, and a ROM (read only memory) 568, which are mutually connected via an internal bus 570. A communication interface 572 is connected to the internal bus 570. The client 520 is connected to the network 550 via the communication interface 572.

Another interface 574 is connected to the internal bus 570, and a hard disk 576 as a mass storage device is further connected to this interface 574. In the structure of this embodiment, the hard disk 576 functions as a rewritable non-volatile storage device. Still another interface 578 is connected to the internal bus 570, and the display 562 is connected with the client 520 via a cable 580 extending from the interface 578.

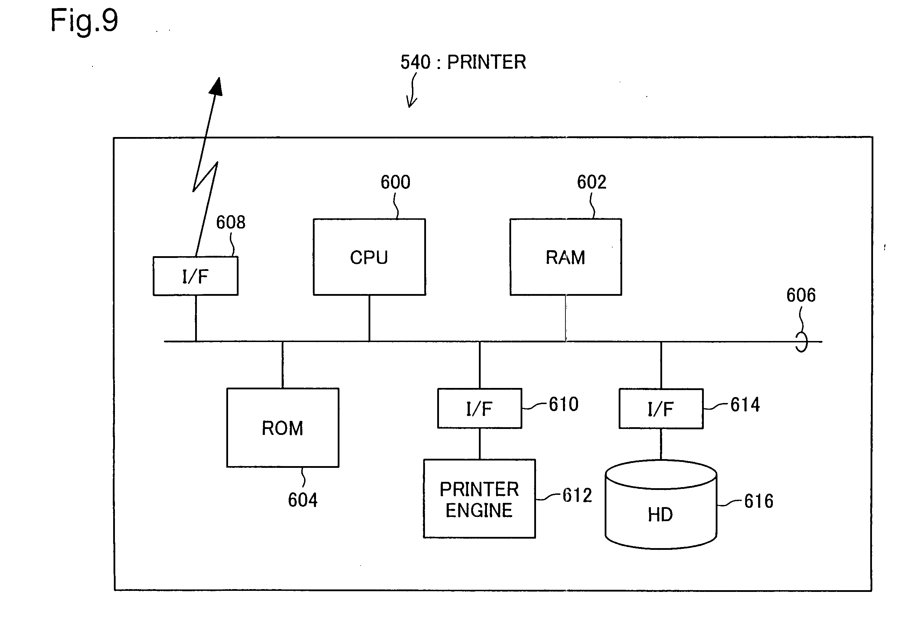

Fig. 9 is a block diagram showing the internal structure of the printer 540. The printer 540 includes a CPU 600, a RAM 602, and a ROM 604, which are mutually connected via an internal bus 606. A communication interface 608 is connected to the internal bus 606, and the printer 540 is connected to the network 550 via the communication interface 608. Another interface 610 is connected to the internal bus 606, and a printer engine 612 is linked with the interface 610.

A hard disk 616 is further connected to the internal bus 606 via still another interface 614. In the structure of this embodiment, the hard disk 616 functions as a rewritable non-volatile storage device.

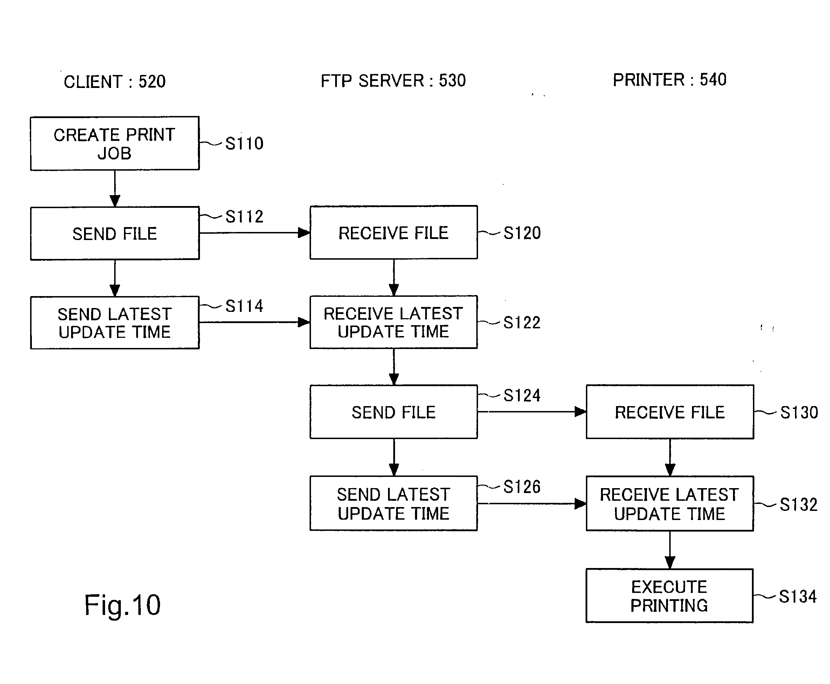

A series of printing process executed in the printing system 510 of this embodiment is described below with reference to the process flow of Fig. 10. In this process flow, the client 520 first creates a print job according to print data in response to a user's input instruction (step S110). The client 520 then sends the created print job in the form of a print file to the FTP server 530 via the network 550 according to the FTP protocol (step S112). An FTP command like 'STOR filename.prn' is used for the transmission.

The client 520 subsequently generates information on the latest update time of the print file and sends the generated information on the latest update time of the print file to the FTP server 530 via the network 550 according to the FTP protocol (step S114). Here the information on the latest update time of the print file represents the time when the print job was created at step S110. An FTP command like 'MDTM 20021011121314 filename.prn' is used for the transmission.

This example shows that the latest update time of the print file is 12:13'14", Oct. 11, 2002.

The FTP server 530 receives the print file sent from the client 520 via the network 550 (step S120) and receives the information on the latest update time of the print file (step S122). The FTP server 530 temporarily holds the received print file therein, and the time of storage is set to the latest update time of the print file. Namely the latest update time of the print file is specified by the time on the real time clock included in the FTP server 530.

The FTP server 530 subsequently transfers the received print file to the printer 540 via the network 550 according to the FTP protocol (step S124) and transfers the information on the latest update time of the print file to the printer 540 according to the FTP protocol (step S126). Here the latest update time of the print file is the time on the real time clock included in the FTP server 530.

The printer 540 receives the print file sent from the FTP server 530 via the network 550 (step S 130) and receives the information on the latest update time of the print file (step S132). The printer 540 then carries out printing, based on the received print file (step S134).

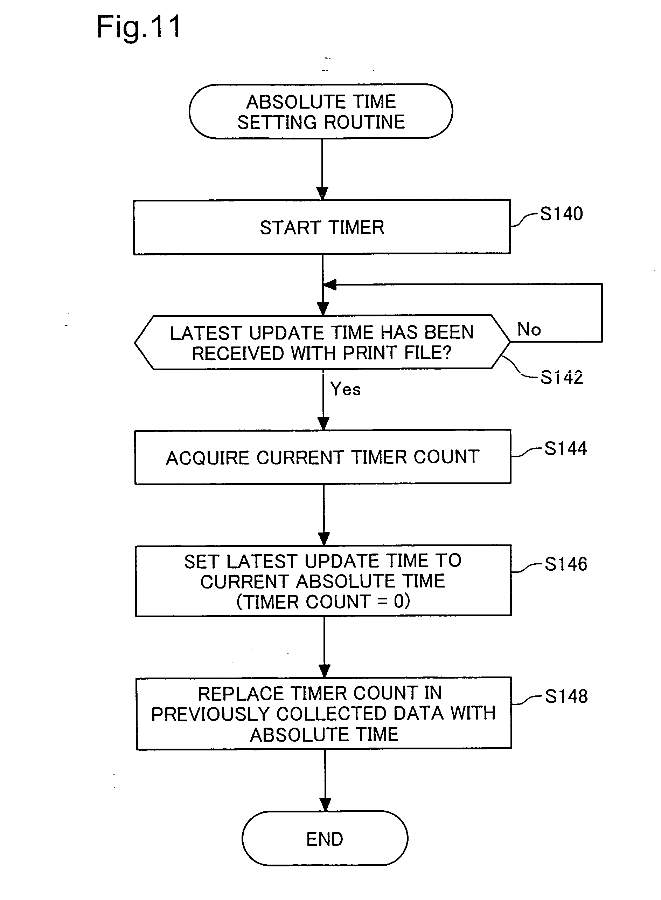

The following describes an absolute time setting routine executed by the printer 540 in this embodiment with reference to the flowchart of Fig. 11. The CPU 600 reads and executes an absolute time setting program stored in the ROM 604 or the hard disk 616 of the printer 540 to implement setting of an absolute time. The absolute time setting routine is automatically activated at the power ON time of the printer 540.

When the absolute time setting routine of Fig. 11 starts, the printer 540 starts a timer (step S140). The printer 540 of this embodiment does not include a real time clock and here activates a timer, which works on the basis of a clock included in the CPU 600. The timer has a count '0' at the start and counts up with elapse of every second.

The printer 540 subsequently determines whether the printer 540 has received the information on the latest update time along with the print file (step S142). When no print file has been received or when the information on the latest update time has not been received along with the print file (in the case of a negative answer at step S142), the printer 540 repeats the processing of step S142 and stands by. In the printing system 510 of this embodiment, the FTP server 530 may not send the information on the latest update time along with the print file. The printer 540 is thus required to wait until transmission of the latest update time with the print file.

When the information on the latest update time has been received along with the print file (in the case of an affirmative answer at step S142), the printer 540 acquires the current count on the timer (step S144) and sets the received latest update time to the current absolute time (step S146). According to a concrete procedure, the printer 540 resets the count on the timer to zero and stores the acquired absolute time. The printer 540 can show the correct time by adding the acquired current count on the timer to the stored absolute time.

The printer 540 replaces the count on the timer included in the data collected on the basis of the timer count with the absolute time (step S148). For example, when the received latest update time is 12:13'14", Oct. 11, 2002, and the count on the timer at the moment is 3 hours 13 minutes 14 seconds, it means that the data acquired at the time point of 3 hours as the timer count has the absolute time of 12:00'00", Oct. 11, 2002.

The absolute time setting routine of this embodiment is concluded here.

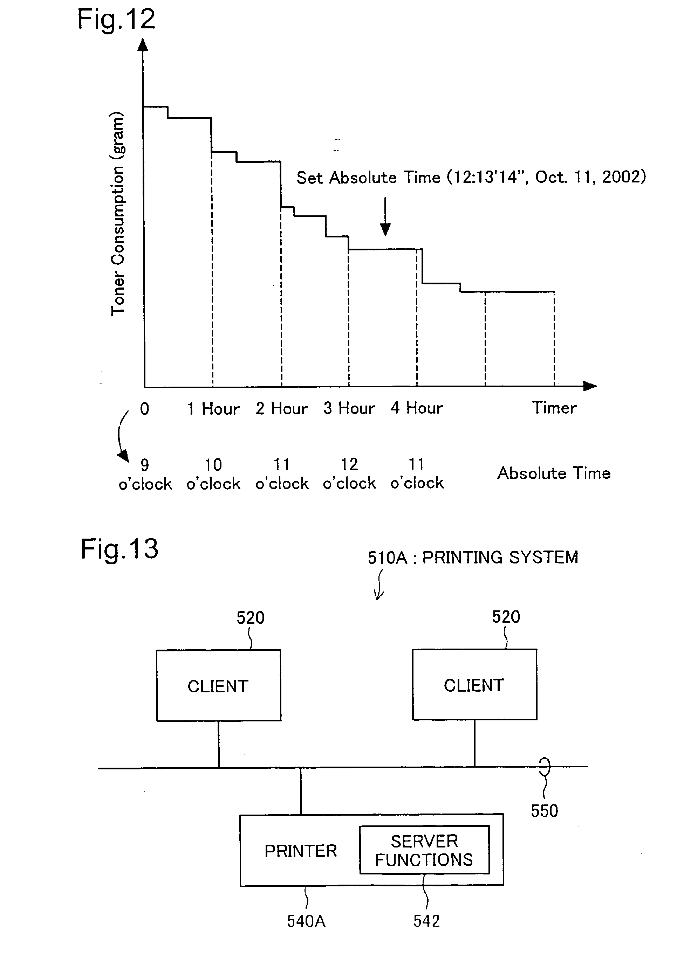

Fig. 12 is a graph showing a variation in remaining amount of toner with elapse of time, based on the data collected by the printer 540 every hour. As shown in the graph of Fig. 12, the timer is activated in response to a power ON operation of the printer 540. When the count on the timer shows elapse of every hour, the printer 540 records the remaining amount of toner with the count on the timer as data, which are stored into the hard disk 616 of the printer 540.

In the illustrated example of Fig. 12, the latest update time of 12:13'14", Oct. 11, 2002 is received when the count on the timer shows elapse of 3 hours 13 minutes 14 seconds. Namely the absolute time at this time point is set equal to 12:13'14", Oct 11, 2002. The remaining amount of toner at the time point of 3 hours 00 minutes 00 seconds as the timer count is thus calculated reversely as the data at the absolute time of 12:00'00", Oct. 11, 2002. In a similar manner, the remaining amount of toner at the time point of 2 hours 00 minutes 00 seconds as the timer count is calculated reversely as the data at the absolute time of 11:00'00", Oct. 11, 2002. The remaining amount of toner at the time point of 1 hour 00 minute 00 seconds as the timer count is calculated reversely as the data at the absolute time of 10:00'00", Oct. 11, 2002. The power ON time of the printer 540 is calculated back as the absolute time of 9:00'00", Oct. 11, 2002.

As described above, in the printing system 510 of this embodiment, the printer 540 receives the latest update time sent along with a print file and sets the absolute time, based on the latest update time of the print file. The arrangement of the embodiment enables the printer 540 to specify the absolute time without sending a new packet for requiring the absolute time to the network 550. This desirably prevents the traffic on the network 550 from being significantly increased by the operation of the printer 540 to specify the absolute time. When receiving a print file, the FTP server 530 immediately sends the print file to the printer 540. The printer 540 can thus regard the latest update time of the print file as the current absolute time.

The correct setting of the time to the real time clock included in the FTP server 530 informs the printer 540 of the correct time, even when the real time clocks of the multiple clients 520 have different counts. The arrangement of this embodiment also synchronizes the time in each of multiple printers that receives a print file from the client 520, even when the real time clock included in the FTP server 530 has a count slightly different from the correct time.

The printer 540 of the embodiment has the timer function. The printer 540 utilizes the timer function to specify a relative time of each data collected after the power ON time and replaces the relative time in the data with the setting of an absolute time. This arrangement enables even the printer 540 without a built-in real time clock to collect data based on the absolute time.

In the embodiment discussed above, the FTP server 530 pushes out a print file to the printer 540. The technique of this embodiment is also applicable to the case where the printer 540 pulls in a print file. The flow of commands in this modified example is given below.

The FTP server 530 receives a print file and sends a printing request of 'filename.prn' with its specified storage location to the printer 540. The printer 540 then sends a command 'RETR filename.prn' to the FTP server 530 to acquire the print file. The printer 540 subsequently sends a command 'MDTM filename.prn' to the FTP server 530 to acquire the latest update time of the print file. The FTP server 530 sends information on the absolute time '213 20021011121314' to the printer 540 in response to the command 'MDTM filename.prn'. Here the numeral '213' at the head represents approval of a reply.

### E. Fourth Embodiment

In the structure of a fourth embodiment, a printer 540A includes server functions. Fig. 13 is a block diagram showing the general construction of a printing system 510A in the fourth embodiment. In this printing system 510A, the printer 540A internally has server functions 542. The FTP server 530 is thus not necessary in this printing system 510A.

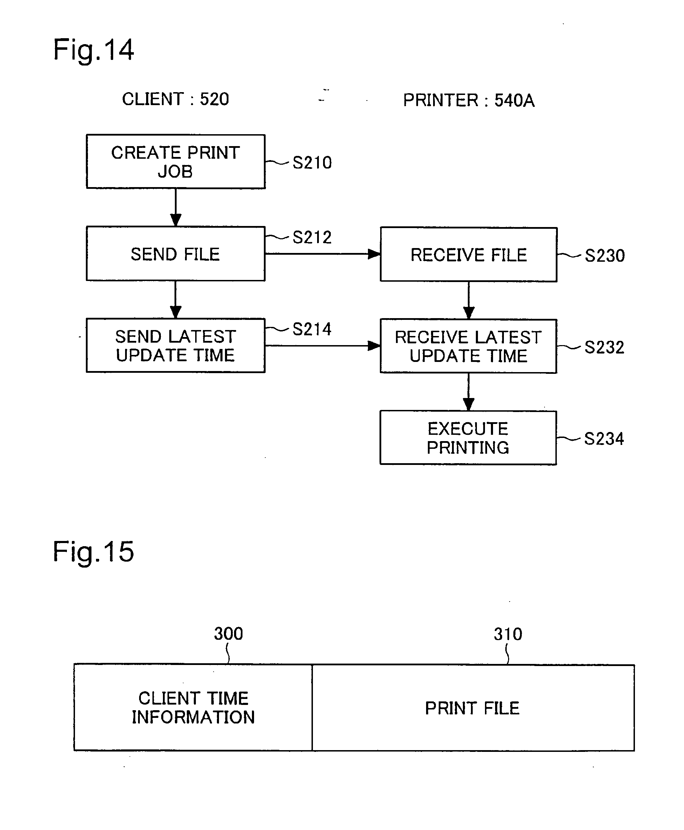

Fig. 14 shows a process flow of sending a file to be printed from the client 520 to the printer 540A in the printing system 510A of the fourth embodiment. This corresponds to the process flow of Fig. 10. In the process flow of Fig. 14, the client 520 first creates a print job according to print data in response to a user's input instruction (step S210). The client 520 then sends the created print job in the form of a print file to the printer 540A via the network 550 according to the FTP protocol (step S212). An FTP command like 'STOR filename.prn' is used for the transmission.

The client 520 subsequently generates information on the latest update time of the print file and sends the generated information on the latest update time of the print file to the printer 540A via the network 550 according to the FTP protocol (step S214). Here the information on the latest update time of the print file represents the time when the print job was created at step S210. An FTP command like 'MDTM 20021011121314 filename.prn' is used for the transmission.

This example shows that the latest update time of the print file is 12:13'14", Oct. 11, 2002.

The printer 540A receives the print file sent from the client 520 via the network 550 (step S230) and receives the information on the latest update time of the print file (step S232). The printer 540A then carries out printing, based on the received print file (step S234).

As clearly understood from this series of processing, the printer 540A of this embodiment receives the information on the latest update time of the print file from the client 520 directly and not via the FTP server 530.

As described above, in the printing system 510A of this embodiment, the printer 540A receives the latest update time sent along with a print file and sets the absolute time, based on the latest update time of the print file. The arrangement of the embodiment enables the printer 540A to specify the absolute time without sending a new packet for requiring the absolute time to the network 550. This desirably prevents the traffic on the network 550 from being significantly increased by the operation of the printer 540A to specify the absolute time. When creating a print file, the client 520 immediately sends the print file to the printer 540A. The printer 540A can thus regard the latest update time of the print file as the current absolute time.

In the embodiment discussed above, the client 520 pushes out a print file to the printer 540A. The technique of this embodiment is also applicable to the case where the printer 540A pulls in a print file. The flow of commands in this modified example is given below.

The client 520 creates a print file and sends a printing request of 'filename.prn' with its specified storage location to the printer 540A. The printer 540A then sends a command 'RETR filename.prn' to the client 520 to acquire the print file. The printer 540A subsequently sends a command 'MDTM filename.prn' to the client 520 to acquire the latest update time of the print file. The client 520 sends information on the absolute time '213 20021011121314' to the printer 540A in response to the command 'MDTM filename.prn'.

### F. Fifth Embodiment

In the third embodiment and the fourth embodiment discussed above, the client 520 sends the latest update time as the time information separately from the print file. The procedure of a fifth embodiment adds the time information of the client 520 to a print file as a composite file and sends the composite file.

The general construction of a printing system in the fifth embodiment is identical with that of the printing system 510 of the third embodiment shown in Fig. 7. In the fifth embodiment, a composite file as shown in Fig. 15 is sent from the client 520 to the FTP server 530. The composite file to be sent from the client 520 to the FTP server 530 includes a print file 310 and client time information 300, which represents information on the time of the client 520.

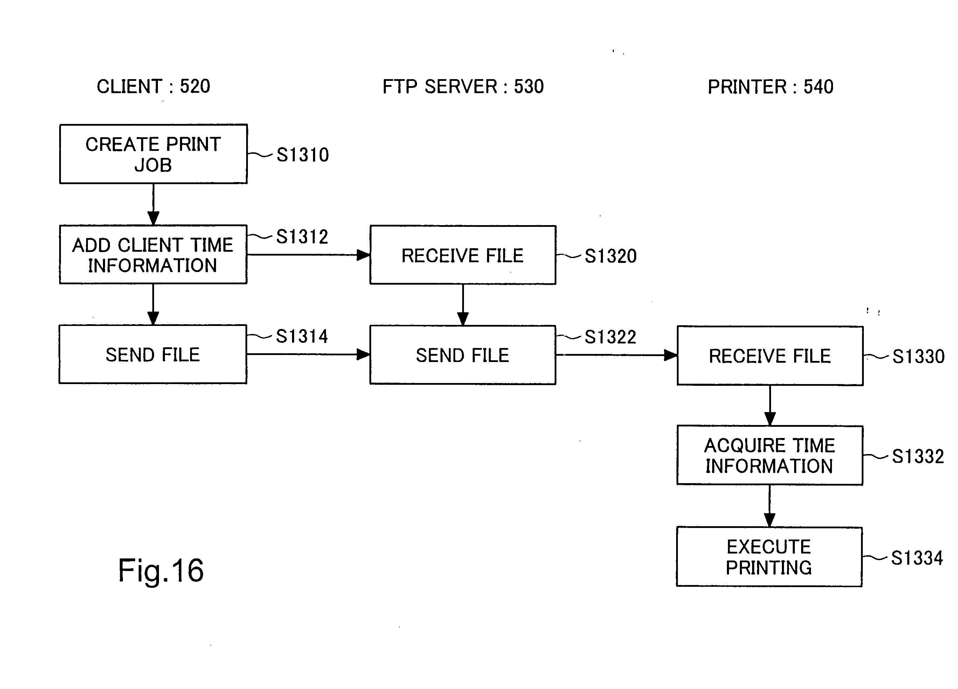

A series of printing process executed in the printing system of this embodiment is described below with reference to the process flow of Fig. 16. In this process flow, the client 520 first creates a print job according to print data in response to a user's input instruction (step S1310). The client 520 then specifies the created print job as a print file 310 and adds time information of the client 520 as client time information 300 to generate a composite file (step S1312).

The client 520 sends the composite file to the FTP server 530 via the network 550 according to the FTP protocol (step S1314). An FTP command like 'STOR filename.prn' is used for the transmission.

The FTP server 530 receives the composite file sent from the client 520 via the network 550 (step S1320). The FTP server 530 subsequently transfers the received composite file to the printer 540 via the network 550 according to the FTP protocol (step S1322).

The printer 540 receives the composite file sent from the FTP server 520 via the network 550 (step S1330) and extracts the client time information 300 from the received composite file (step S1332). The printer 540 then extracts the print file 310 from the received composite file and executes printing according to the print file 310 (step S1334).

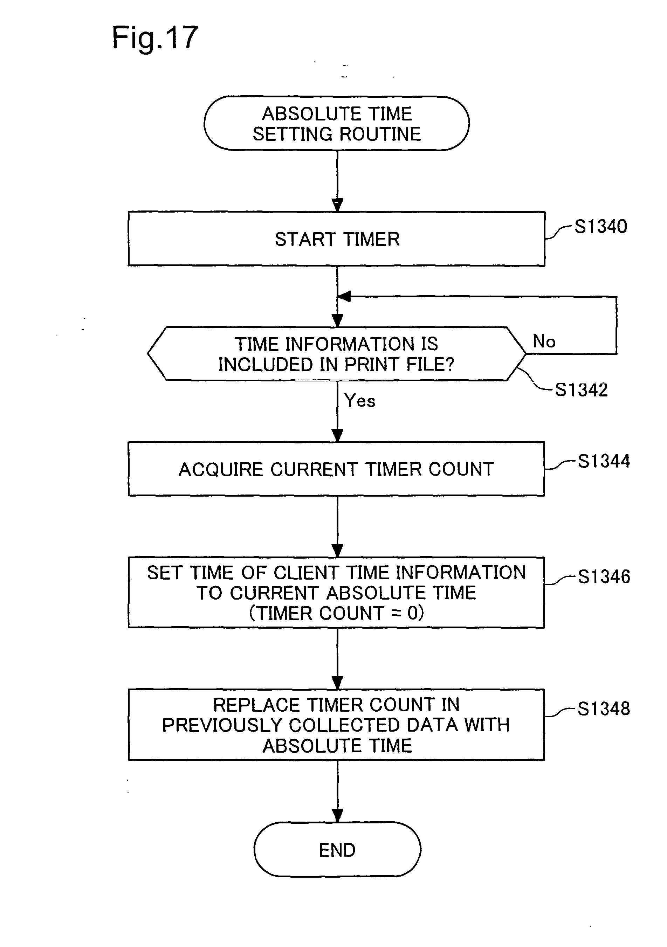

The following describes an absolute time setting routine executed by the printer 540 in this embodiment with reference to the flowchart of Fig. 17. The CPU 600 reads and executes an absolute time setting program stored in the ROM 604 or the hard disk 616 of the printer 540 to implement setting of the absolute time. The absolute time setting routine is automatically activated at the power ON time of the printer 540.

When the absolute time setting routine of Fig. 17 starts, the printer 540 starts a timer (step S1340). The printer 540 of this embodiment does not include a real time clock and here activates a timer, which works on the basis of a clock included in the CPU 600. The timer has a count '0' at the start and counts up with elapse of every second.

The printer 540 subsequently determines whether the client time information 300 is included in a received composite file (step S1342). When no composite file has been received or when the received composite file does not include the client time information 300 (in the case of a negative answer at step S1342), the printer 540 repeats the processing of step S1342 and stands by. In the printing system 510 of this embodiment, the client 520 may not send the client time information 300 attached to the print file 310 as the composite file. The printer 540 is thus required to wait until transmission of the client time information 300 attached to the print file 310 in the form of a composite file.

When the received composite file includes the client time information 300 (in the case of an affirmative answer at step S1342), on the other hand, the printer 540 acquires the current count on the timer (step S1344) and sets the time of the client time information 300 extracted from the received composite file to the current absolute time (step S1346). According to a concrete procedure, the printer 540 resets the count on the timer to zero and stores the acquired absolute time. The printer 540 can show the correct time by adding the acquired current count on the timer to the stored absolute time.

The printer 540 replaces the count on the timer included in the data collected on the basis of the timer count with the absolute time (step S1348). For example, when the received latest update time is 12:13'14", Oct. 11, 2002, and the count on the timer at the moment is 3 hours 13 minutes 14 seconds, it means that the data acquired at the time point of 3 hours as the timer count has the absolute time of 12:00'00", Oct. 11, 2002.

The absolute time setting routine of this embodiment is concluded here.

As described above, in the printing system 510 of this embodiment, the printer 540 sets the absolute time, based on the client time information 300 sent with the print file 310 in the form of a composite file. The arrangement of the embodiment enables the printer 540 to specify the absolute time without sending a new packet for requiring the absolute time to the network 550. This desirably prevents the traffic on the network 550 from being significantly increased by the operation of the printer 540 to specify the absolute time. When receiving a composite file from the client 520, the FTP server 530 immediately transfers the composite file to the printer 540. The printer 540 can thus regard the client time information 300 included in the composite file as the current absolute time.

The technique of this embodiment is also applicable to the construction of a printing system including the printer 540A having the server functions 542 as shown in Fig. 13.

### G. Sixth Embodiment

In a sixth embodiment of the present invention, a printer actively acquires the absolute time from an FTP server, replaces the count on a timer included in the data collected on the basis of the timer count with the absolute time, and sends the time-replaced data as a report file to the FTP server.

The general construction of a printing system in the sixth embodiment is identical with that of the printing system 510 in the third embodiment shown in Fig. 7. The structure of a client and the structure of a printer in the sixth embodiment are identical with those of the client 520 and the printer 540 shown in Figs. 8 and 9.

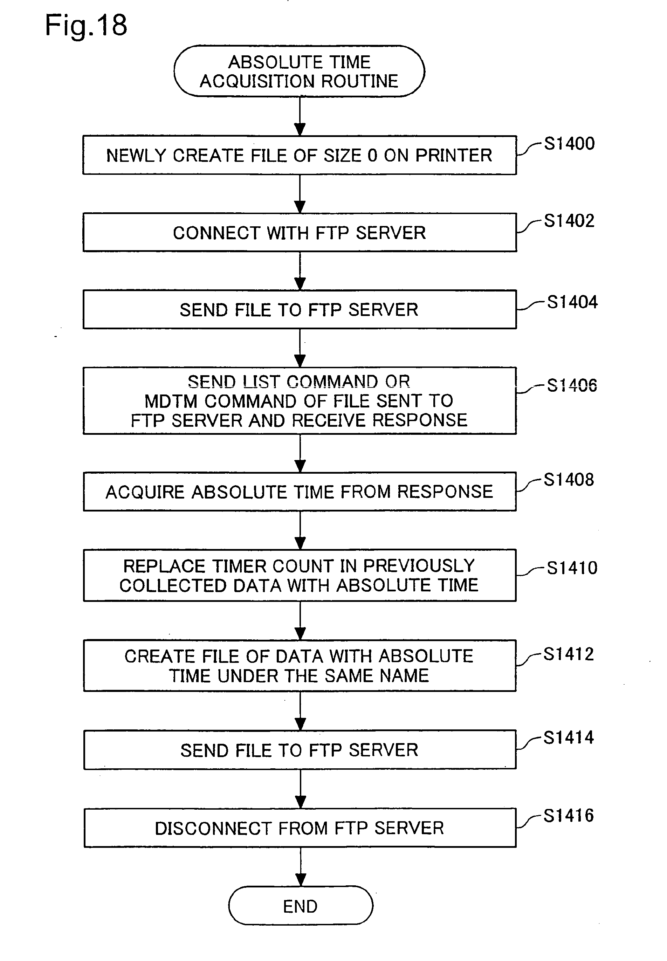

Fig. 18 is a flowchart showing an absolute time acquisition routine executed by the printer 540 of this embodiment. The CPU 600 reads and executes an absolute time acquisition program stored in the ROM 604 or the hard disk 616 of the printer 540, so as to implement acquisition of the absolute time.

When the absolute time acquisition routine of Fig. 18 starts, the printer 540 as an FTP client newly creates a file having a size 0 in the hard disk 616 of the printer 540 (step S1400) and connects with the FTP server 530 (step S1402).

The printer 540 subsequently sends the file of the size 0 created in the hard disk 616 to the FTP server 530 (step S1404). The printer 540 then sends a LIST command or an MDTM command of the file sent at step S1414 and receives a response from the FTP server 530 (step S1406).

The printer 540 extracts the absolute time included in the received response (step S1408), and replaces the count on a timer included in the data collected on the basis of the timer count with the extracted absolute time (step S1410).

The printer 540 creates a data file with the replacement of the absolute time under the same name as that of the file of the size 0 created at step S1400 in the hard disk 616 (step S1412). The printer 540 subsequently sends the created data file to the FTP server 530 as a data reporting address server (step S1414), before disconnecting from the FTP server 530 (step S1416).

As described above, in the printing system 510 of this embodiment, the printer 540 functioning as an FTP client acquires the absolute time from the FTP server 530. The printer 540 of this embodiment collects the information on the status and the expendables of the printer 540 and holds the collected data with the time as the count on the timer included in the printer 540. The printer 540 acquires the absolute time from the FTP server 530, replaces the timer count included in the collected data with the absolute time, and sends the data file with replacement of the absolute time to the FTP server 530 as the data reporting address server. This arrangement enables the information on the absolute time to be received from the FTP server 530, prior to transmission of the data file to the FTP server 530 as the data reporting address server. The data file is thus transmitted to the FTP server 530 after replacement of the relative time with the absolute time.

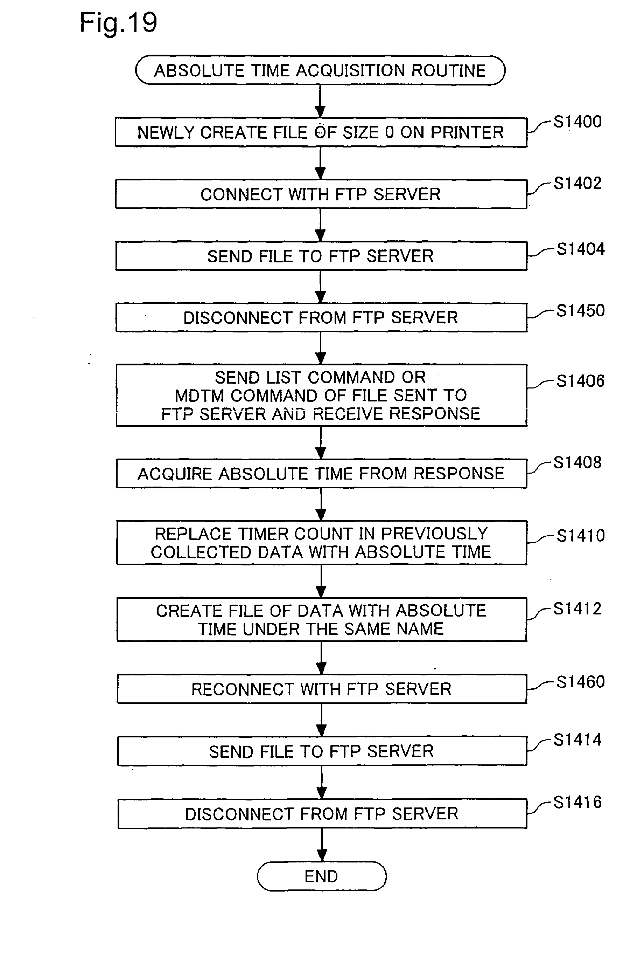

The procedure of the sixth embodiment sends the file of the size 0 to the FTP server 530 at step S1404 and sends the data file to the FTP server 530 at step S1414, while keeping connection with the FTP server 530, as shown in the flowchart of Fig. 18. One possible modification may adequately cut the connection with the FTP server 530. According to one modified procedure shown in the flowchart of Fig. 19, the printer 540 disconnects from the FTP server 530 (step S1450) after transmission of the file of the size 0 to the FTP server 530 at step S1404. The printer 540 then reconnects with the FTP server (step S1460) prior to transmission of the data file to the FTP server 530 at step S1414.

The technique of Fig. 18 is generally effective for reliving the traffic on the network. The modified technique of Fig. 19 is advantageous in the case where the replacement of the timer count included in the previously collected data with the absolute time takes a rather long time period (step S1410).

The embodiments discussed above are only illustrative and not restrictive in any sense. For example, in the structure of the third embodiment, the printer 540 sequentially sends the print file and the information on the latest update time of the print file in this order. The order of transmission is not restrictive at all but may be reversed. The only requirement is that the information on the latest update time of a print file should be sent along with the print file.

In the construction of the third embodiment, the FTP server 530 is used to transfer the print file and the information on its latest update time sent from the client 520. The FTP server 530 is, however, not restrictive, but another file server may be applied to transfer the print file and the information on its latest update time according to another protocol.

A program for executing the series of processing discussed in each of the above embodiments may be recorded and delivered in the form of a recording medium, such as a flexible disk, a CD-ROM (compact disc-read only memory), a ROM, or a memory card. In such cases, the client 520, the FTP server 530, and/or the printer 540 may read and execute the program recorded in the recording medium to attain the series of processing in each embodiment discussed above.

The client 520, the FTP server 530, and/or the printer 540 may store other programs, such as an operating system and other application programs. In such cases, the client 520, the FTP server 530, and/or the printer 540 may utilize any of the other programs and record a command in the recording medium to call a program that attains the processing equivalent to each of the above embodiments among the programs stored in the client 520, the FTP server 530, and/or the printer 540.

The program may be delivered in the form of a carrier wave via a network, instead of being recorded in the recording medium. The client 520, the FTP server 530, and/or the printer 540 reads and executes the program transferred in the form of a carrier wave on the network, so as to attain the various arrangements discussed above as the embodiments.

The program recorded in the recording medium or transferred in the form of a carrier wave on the network may be encoded and compressed. In such cases, the client 520, the FTP server 530, and/or the printer 540 are required to read the program from the recording medium or the carrier wave and carry out decoding and extension of the program, prior to its execution.

All the embodiments and modified examples discussed above are to be considered in all aspects as illustrative and not restrictive. There may be many other modifications, changes, and alterations without departing from the scope or spirit of the main characteristics of the present invention.

All changes within the meaning and range of equivalency of the claims are therefore intended to be embraced therein.

## Claims

1. A device that is connected with a network, said device comprising:
a timer that measures elapse of a time period;
a network communication module that communicates with another apparatus connecting with the network to provide a specified service;
a time acquisition module that acquires an absolute time from said another apparatus in the process of communication; and
a base time setting module that sets the absolute time as a base time for specifying a time at each time point, based on a measurement result of said timer.

2. A device in accordance with claim 1, said device further comprising:
a log recording module that records a log, which represents a working status of said device and is mapped to an elapsed time period since the base time, based on the measurement result of said timer,
wherein said network communication module transmits the log to a predetermined server via the network, and
said time acquisition module acquires the absolute time from said predetermined server in the course of transmission.

3. A device in accordance with claim 2, wherein said log recording module corrects the elapsed time period by taking into account a time interval specified from absolute times acquired more than once and a measurement result of said timer corresponding to the specified time interval, and records the log.

4. A device in accordance with claim 2, wherein a time interval of transmitting the log is longer than a time interval of recording the log.

5. A device in accordance with claim 2, wherein said network communication module transmits the log with an address dynamically allocated to said device via the network.

6. A device in accordance with claim 2, said device further comprising:
a working status detection module that outputs a continuously varying working status of said device as a discretely varying parameter value,
wherein said log recording module records the log at a specific time interval shorter than a minimum time interval that causes the discrete variation.

7. A management server that manages a working status of a device connecting with a network, said management server comprising:
a log receiver module that receives a log, which represents the working status of said device and is mapped to a time, from said device;
a time correction module that corrects the time mapped to the log by taking into account a time interval specified from reception times of multiple logs and a measurement result of a timer corresponding to the specified time interval; and
a log holder module that holds the log mapped to said device.

8. A management server in accordance with claim 7, wherein said device transmits the log at a preset cycle, and
said time correction module corrects the time by regarding the preset cycle as a time interval measured by said timer.

9. A management server that manages a working status of a device connecting with a network, said management server comprising:
a log holder module that holds a quantitative parameter value relating to the working status of said device as a log in a time series; and
a variation output module that, in response to a reset of the parameter value by an operation of said device, adds a parameter value after the reset to a parameter value immediately before the reset and outputs a time-based variation in working status of said device over the reset, based on a result of the addition.

10. A device in accordance with claim 1, said device outputting either of a sound and an image,
wherein said timer measures a time period since a power ON time of said device,
said network communication module receives an output file, which is to be output from said device, and
said time acquisition module receives the absolute time, which is attached to the output file received by said network communication module.

11. A device in accordance with claim 10, wherein said time acquisition module receives a latest update time of the output file, which is received by said network communication module, as the absolute time.

12. A device in accordance with claim 11, wherein the latest update time represents an absolute time when a client has created the output file.

13. A device in accordance with claim 11, wherein the output file is transmitted to said device via a predetermined file server, and
the latest update time represents an absolute time when said predetermined file server has received the output file.

14. A device in accordance with claim 10, wherein the absolute time is included in the output file.

15. A device in accordance with claim 1, said device not being equipped with a built-in real time clock, which works even in a power OFF state of said device.

16. A device in accordance with claim 1, said device further comprising:
a time specification module that adds the measurement result of said time to the base time and thereby specifies a time at each time point,
wherein said base time setting module resets said timer to zero and updates the base time, in response to acquisition of the absolute time.

17. A device in accordance with claim 1, wherein said timer is activated at a power ON time of said device and counts a time period since the power ON time as a relative time,
said network communication modules transmits data collected by said device as a report file to a reporting address server, and
said time acquisition module receives the absolute time from said reporting address server, while said network communication module transmits the report file to said reporting address server.

18. A client that creates a print file, which is to be output to a printer, said client comprising:
a print file generation module that creates the print file as a print job;
an absolute time information generation module that generates information on an absolute time at a time point when the print file is created; and
a transmission module that transmits the created print file and the generated information on the absolute time to said printer.

19. A printing system comprising a client that creates a print file and a printer that connects with said client,
said client comprising:
a print file generation module that creates the print file as a print job;
an absolute time information generation module that generates information on an absolute time at a time point when the print file is created; and
a transmission module that transmits the created print file and the generated information on the absolute time to said printer,
said printer comprising:
a timer that is activated at a power ON time of said printer and counts a time period since the power ON time as a relative time;
a network communication module that receives the print file transmitted from said client;
a time acquisition module that receives the information on the absolute time, which is transmitted along with the print file; and
a time specification module that specifies a time at each time point, based on the absolute time received by said time acquisition module.

20. A device control method that controls a device connecting with a network, said device control method comprising the steps of:
activating a timer included in said device to measure elapse of a time period;
communicating with another apparatus connecting with the network to provide a specified service;
acquiring an absolute time from said another apparatus in the process of communication; and
setting the absolute time as a base time for specifying a time at each time point, based on a measurement result of said timer.

21. A management method that causes a management server to manage a working status of a device connecting with a network, said management method comprising the steps of:
receiving a log, which represents the working status of said device and is mapped to a time, from said device;
correcting the time mapped to the log by taking into account a time interval specified from reception times of multiple logs and a measurement result of a timer corresponding to the specified time interval; and
holding the log mapped to said device.

22. A management method that causes a management server to manage a working status of a device connecting with a network, said management method comprising the steps of:
holding a quantitative parameter value relating to the working status of said device as a log in a time series; and
in response to a reset of the parameter value by an operation of said device, adding a parameter value after the reset to a parameter value immediately before the reset and outputting a time-based variation in working status of said device over the reset, based on a result of the addition.

23. A recording medium in which a computer program for controlling a device connecting with a network is recorded, said computer program comprising:
a first program code that activates a timer included in said device to measure elapse of a time period;
a second program code that communicates with another apparatus connecting with the network to provide a specified service;
a third program code that acquires an absolute time from said another apparatus in the process of communication; and
a fourth program code that sets the absolute time as a base time for specifying a time at each time point, based on a measurement result of said timer.

24. A recording medium in which a computer program for causing a management server to manage a working status of a device connecting with a network is recorded, said computer program comprising:
a first program code that receives a log, which represents the working status of said device and is mapped to a time, from said device;
a second program code that corrects the time mapped to the log by taking into account a time interval specified from reception times of multiple logs and a measurement result of a timer corresponding to the specified time interval; and
a third program code that holds the log mapped to said device.

25. A recording medium in which a computer program for causing a management server to manage a working status of a device connecting with a network is recorded, said computer program comprising:
a first program code that holds a quantitative parameter value relating to the working status of said device as a log in a time series; and
a second program code that, in response to a reset of the parameter value by an operation of said device, adds a parameter value after the reset to a parameter value immediately before the reset and outputs a time-based variation in working status of said device over the reset, based on a result of the addition.
